# EUROPEAN PATENT APPLICATION

(11) **EP 2 365 459 A2**
(43) Date of publication of application: **14.09.2011**
(21) Application number: 11157476.0
(22) Date of filing: 09.03.2011
(51) Int. Cl.: G06F 21/00

(54) **Data storage apparatus**

(30) Priority: 09.03.2010 GB 1003885
(71) Applicant: Daniels, Lewis, East Aberthaw South Glamorgan CF62 3JV (GB)
(72) Inventor: Daniels, Lewis, East Aberthaw South Glamorgan CF62 3JV (GB)
(74) Representative: Baker, Thomas Edward

(57) **Abstract**

The present invention relates to a secure memory storage system. In particular there is a data storage device having a receiver for receiving data and a transmission control device physically independent of the data storage device. The apparatus is arranged such that when a connection between the transmission control device and the data storage device is established, transmission of data between the data storage device and a further device (e.g. a PC) is enabled. Wireless connection between the transmission control device and data storage device is not established, and transmission of data between the data storage device and the further device (e.g. PC) is non-enabled. The transmission control device therefore controls data transfer between the data storage device and the further device.

## Description

Universal Serial Bus (USB) flash drives consist of a flash memory data storage device integrated with a USB interface. Such USB flash drives are typically removable and rewritable. These devices are extremely common where data can be transferred via the drive from one location to another. The USB flash drive typically may be of the order of 7-10 cm long and 1-2 cm wide having a storage capacity typically up to around 256GB and as such a large amount of data can be stored and carried from one location to another. USB flash drives are typically powered by the USB connection and therefore do not require a battery. They include a printed circuit board which carries the circuit element and the USB connector.

With wide deployment of flash drives, the issue of data and information security is particularly important. Current security measures generally include the use of encryption. However, due to the nature of the USB flash drive with their small size, they can be easily misplaced, left behind or otherwise lost. This is a particular problem if the data they contain is sensitive and for this reason software encryption systems are utilised. However, if the USB flash drive is lost, a third party can connect the USB device and potentially break the encryption code.

The present invention provides a secure memory storage system.

According to the present invention there is a data storage apparatus comprising:
- a data storage device having a receiver for receiving data;
- a transmission control device physically independent of the data storage device; the apparatus arranged such that when a connection between the transmission control device and the data storage device is established, transmission of data between the data storage device and a further device is enabled, and when a connection between the transmission control device and data storage device is not established, transmission of data between the data storage device and the further device is non-enabled.

Significant advantages are associated with such an arrangement. As the transmission control device and the data storage device are separate physical components, the transmission control device, which may in one embodiment be a key, and preferably a USB connecting key, may be (preferably physically) connected to a further device (e.g. a host device such as a personal computer) for example and is configured to enable transfer of information between the host device to the data storage device. Accordingly, there is no direct physical interface between the data storage device and the host device and thus the only means of accessing the data storage device is through the use of the transmission control device. Such an arrangement is significantly different to, for example, a lap top computer connected to a server where data may be transmitted therebetween with the transmission password protected. If the password protection is analogous to the transmission control device of the present invention, in the absence of such password data may transfer freely, however without the transmission control device of the present invention data cannot be transferred. Furthermore, password protection present in networks does not include connection between the password protection and the server, rather the laptop for example is allowed to connect directly to the server.

The data storage device beneficially has no exterior ports for enabling connection to the further device for data transfer therebetween. In one embodiment the data storage device may be free of physical external ports, and may be sealed to prevent liquid ingress. Access to the internals of the data storage device may therefore be prevented.

In one embodiment, the transmission control device enables or allows a direct data transfer path between the further device and the data storage device. Thus, in this embodiment data does not pass via or through the transmission control device. However, in another embodiment the transmission control device beneficially provides an intermediate data transfer path between the data storage device and the further device. A significant benefit associated with the data stored on the host device being transmitted via the transmission control device is that if a virus is present on the host device, the transmission control device will act as a barrier to prevent the virus being sent to the data storage device and the transmission control device will be affected only.

The further device is beneficially a data source or a data destination. The data source may comprise a host device such as a host computer stored on which is data which may be transferred to the data storage device. A data destination may be a data reader or data player which may be a means, for example, to play music.

The data storage device is beneficially matched to the transmission control device, meaning that the data storage device cannot be accessed without the matched transmission control device. Furthermore, the data storage device is predisposed to be matched to one or more specific transmission control devices. The transmission control device beneficially has an interface for connecting to the further device. The interface for connecting the transmission control device to the further device is beneficially a universal serial bus (USB) connection. Such a connection has in recent years become fairly standard for portable data storage transfer. The transmission control device beneficially comprises a transmitter for transmitting data to the data storage device.

The transmission control device beneficially includes an identifier for matching with the data storage device. Such an identifier enables the transmission control device to allow communication with and user access to the data storage device through the transmission control device or the data source directly assuming that a user input which allows matching of the data storage device and the transmission control device is correct. Alternatively, the identifier may allow direct communication between the data storage device and the host device. The identifier thus acts effectively as a key to allow access to the data storage device.

The data storage device beneficially further comprises a transmitter for transmitting data to the transmission control device, and the transmission control device beneficially comprises a receiver for receiving data from the data storage device wherein the data is preferably encrypted. Accordingly, the data can be transferred both from the host device such as the computer to the data storage device and vice versa.

The transmission control device beneficially comprises means to enable power to be drawn from the data source.

The transmission control device and the data storage device beneficially communicate via a wireless communication network. Such means of transfer is particularly advantageous as it enables there to be no external data transfer ports on the data storage device. Instead, the only means for uploading or downloading the stored electronic data is via the transmission control device (which may be termed a "key"). A suitable wireless communication may be via Bluetooth, Zigbee or radio frequency modules. The data is beneficially transferred between the data storage and the transmission control device via short length radio waves. The benefits of data transfer through the use of Bluetooth are:
1) Bluetooth has the capability of adding password combinations.
2) Bluetooth allows you to set frequencies to limit the distance of the radio wave frequencies to within a metre.
3) Bluetooth works on a limited bandwidth allocation as opposed to radio and zigbee which function on multilevel radiowaves.

As a result Bluetooth is particularly suitable due to its security features.

The transmission control device includes software configured such that the transmission control device is password protected. This means that when the transmission control device is in communication with a data source such as a personal computer, a password is beneficially required in order that the transmission control device can communicate with the personal computer. Alternatively or beneficially in addition, once a successful password is entered, a further identifier must be entered in order that the transmission control device may communicate with the data storage device. Beneficially, an additional level of security is provided wherein data transmitted is encrypted by the transmission control device before transmitting to the data storage device. The transmission control device beneficially comprises an encryption processor for performing encryption operations on data prior to transferring to the data storage device.

Furthermore the data storage device preferably comprises an encryption processor for performing encryption operations on data prior to transferring the data to the transmission control device.

The data storage device beneficially comprises a rechargeable power source. In one embodiment the power source is beneficially rechargeable via an access port in the data storage device. The power source is beneficially a rechargeable battery. Alternatively, the power source is rechargeable through a wireless charging system. The wireless charging system may beneficially utilise magnetic induction. The system even more beneficially comprises a component including an induction coil. Beneficially, the data storage device comprises a battery configured to be charged via an induction coil.

The data storage device may include means to identify the device to a global positioning system. Such means is beneficial as the location of the device may be monitored, for example, in the event that it is stolen or lost it is possible that the device may be located and retrieved.

In addition to the integration of a GPS system, an additional feature which may be incorporated into the data storage device will be RFID (Radio Frequency Identification). This is beneficial because as well as being able to retrieve the device should it be lost or stolen, the device may be remotely accessed in order to format the data storage device or send the data to a secure location. Accordingly, the data storage device may further include a radio frequency tag or label (which may comprise an identifier, which alternatively may comprise that found in SIM card technology).

The data storage device beneficially further comprises a tag for providing information for identifying the location of the data storage device. This is beneficial should the data storage device be lost. The tag beneficially further comprises a receiver for receiving an interrogation signal from a remote location and a transmitter for transmitting a signal therefrom. The data storage device may further be configured in order that in the event that the data storage device is lost, the data storage device may be formatted to remove data therefrom, or alternatively the data could be removed and transmitted to a remote location. The tag beneficially comprises a radio frequency tag.

The present invention also extends to an embodiment wherein the data storage device may be able to transmit or beneficially stream data to enable a reader to read the data, which may be, for example, video feed or music feed. Also according to the present invention there is a data storage system comprising:
- a data storage device having a receiver for receiving data and a transmitter for transmitting data;
- a first transmission control device physically independent of the data storage device;
- a second transmission control device physically independent of the data storage device, the system arranged such that when a connection between the first transmission control device and the data storage device is established transmission of data from a data source to the data storage device is enabled, and when a connection between the data storage device is not established transmission control device are disconnected transmission of data therebetween is non-enabled, and when a connection between the data storage device and the second transmission control device is established, transmission of data from the data storage device to a data destination is enabled, and when a connection between the second transmission control device and the data storage device is not established transmission of data therebetween is non-enabled.

The present invention will now be described by way of example only with reference to the accompanying drawings in which:
Figure 1 is a schematic representation of an apparatus according to an exemplary embodiment of the present invention.
Figure 2 is a schematic representation of a transmission control device and storage device according to an exemplary embodiment of the present invention identifying internal components.
Figure 3 is a schematic representation of a transmission control device and storage device according to an exemplary embodiment of the present invention showing a second option of figure 2 and the components of the transmission control device and storage device respectively.
Figure 4 is a schematic representation of the user operations and shows the capabilities of both the paired transmission control devices.

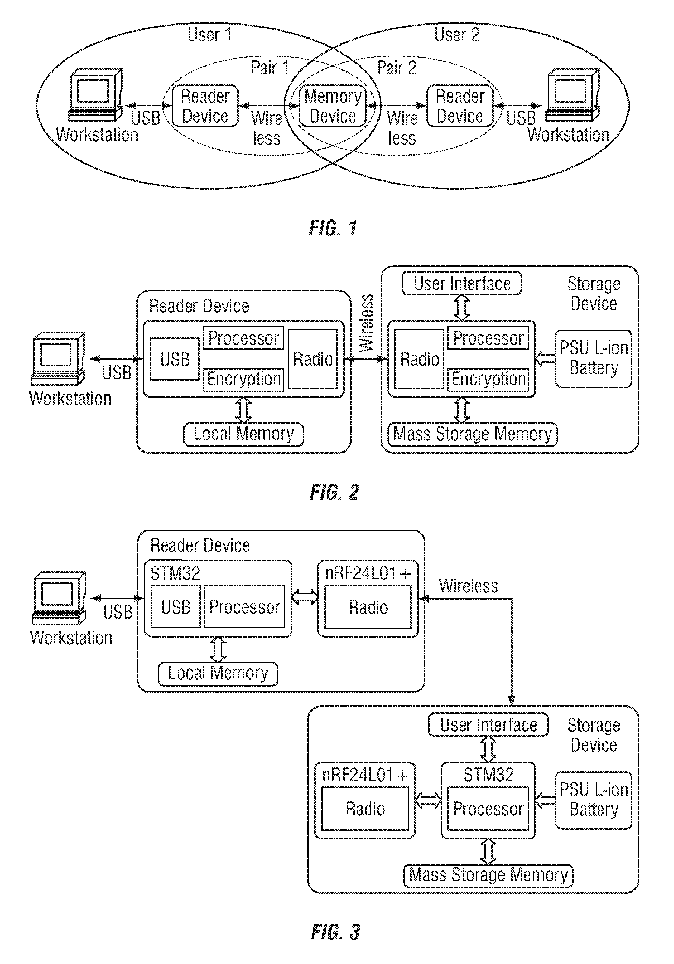

Referring to Figure 1, a data source (subsequently referred to in the exemplary embodiments on a host device) is shown connected via a USB connection, to the transmission control device (now referred to as a "key"). A physical connection may therefore be provided between the host device and the key.

Traditional USB flash memory devices include the memory capability incorporated into the device which physically connects to the host device. However, as shown in Figure 1 according to the present invention, the key can communicate wirelessly with the memory device. The key and the data storage device are matched (non-physically) together such that matching keys and data storage devices can communicate whereas unmatched keys and data storage devices cannot communicate. A significant benefit of such an arrangement is the security afforded to the data stored on the data storage device. In order to access such data a user must have the key and the associated linked data storage device and must also have one or more identifiers for enabling access to the data storage device. A first identifier is beneficially required when the transmission control device is in communication with a host device such that the host device may communicate with the key. The host device side application requires the entering of an identifier such as access code or PIN which enables the user to use the key. This may be set by the user in the set up stage for each key. Each key beneficially has a unique identifier to allow the data storage device to pair with a maximum number of keys. Accordingly, it is not possible to access the data storage device without a matched key.

As indicated in Figure 1, the data storage device may be accessed via two keys such that two separate users may access the data storage device independently. This means that a third party can be given a key such that the third party can obtain access to the data storage device. This is analogous to providing a spare car key, which allows the primary user to continue to use the car if the first key is lost or misplaced and also allows a chosen third party to access and use the car. The identifier for each of the transmission control devices to enable each transmission control device to be accessed via the work station may be different, however preferably all utilise the same identifier. This identifier may be set by the user and altered as often as desired. In one embodiment each key may have a unique identifier to allow the data storage device to pair to a maximum of, for example, two keys. In order to add a further key, at least one existing key will have to be removed. In order to maintain maximum security, the data storage device will be formatted to remove data therefrom in the event of removing an existing pair of keys. The user may be prompted to enter an identifier to confirm that the user is entitled to access the storage device. On using for a first time, the user is beneficially requested to enter a unique identifier such as a new PIN number.

Data transmitted between the key and the data storage device is beneficially encrypted using an encryption code thereby ensuring the wireless communication security is maximised. Bluetooth connection is beneficially utilised as it requires a higher level of security compared to radio frequency or zigbee and the communication range can be limited to approximately 1 metre. The encryption code is a sequence used to encrypt and decrypt the wireless data in the communications. The software is configured such that entering of either the identifiers that are required for the host device to communicate with the key and the key to communicate with the data storage device incorrectly three times may result in the formatting of the memory and/or the cause the key and/or storage device to be permanently locked. Once the identifiers have been entered, the user may, via the work station, transfer data between the work station and the data storage device via the key.

In the embodiment as shown in Figure 1, more than one user may have access to the data storage device. Accordingly, more than one key may be provided. There are significant advantages associated with such an arrangement as described. In the event that the key is left by accident in communication with (such as via a USB port for example) a host device such as a computer in a public place for example, a third party cannot access the data storage device in the first event wherein the authorised user has the data storage device. Without the necessary identifiers (or access codes), an unauthorised user would not be able to enable the key to communicate with the host device. Even in the event that an unauthorised person had access to the key and the data storage device, they would not have the identifier for the key, nor identifier for enabling the key to communicate with the data storage device required in order that the key can communicate with the host device or data storage device can communicate with the transmission control device.

Once the correct identifiers (which may be words and/or numerals for example) have been entered, it is possible for the authorised user to personalise these identifiers in accordance with known techniques.

Referring to Figure 2, there is schematic representation of the internal components of the key and a data storage device. The key beneficially comprises a processor which may be for example an 8-bit processor, and an encryption code-processor beneficially using the Advanced Encryption Standard (AES). A dedicated radio and USB transceiver is provided utilising a wide range of frequencies. A local memory, which may be unsecured and unencrypted of, for example, 32MB is provided which is used to provide the user with the installation programme for the key to allow the use of the device by the workstation. Such a key may be of small size and low weight.

The data storage device includes a user interface enabling the user to access the data storage device from the host device and includes mass storage memory, the size of which may be altered depending on specific requirements. In the example as shown in Figure 2, there is a mass storage memory of 1 GB. A battery is also beneficially provided in order to power the data storage device. In the examples shown a rechargeable lithium iron battery may be provided. A port for mains charging of the battery may also be provided, however it is preferable that no exterior ports in the data storage device housing are provided thereby improving security. The data storage device may be completely sealed and may be charged via, for example, magnetic induction charging. Wireless charging may be achieved through the provision of a pad having an array of coils therein which spread a low power magnetic field over the pad's surface so that the data storage device located on the surface can intercept the charging flux. Accordingly, the battery may be charged wirelessly. In an intermediate embodiment, the data storage device includes one or more contacts, similar or the same as provided in a typical rechargeable home telephone that communicate with corresponding contacts in a receiving cradle. Such a receiving cradle comprises connection means to a power supply.

In both the key and the data storage device the radio transmitter/receiver and the processor may be formed on the same support. Accordingly, the key and the data storage device may be extremely small.

In an alternative exemplary embodiment as indicated in Figure 3, there is an alternative configuration for the key and data storage device. In this configuration, a stand alone radio transceiver is provided and a 32-bit processor is incorporated into both a key and data storage device. Such a processor has improved scalability with low cost. The arrangement as represented in Figure 3 increases the IC count due to the radio transceiver and processor being separate however this results in the casing for the key and data storage device respectfully to be of larger size. In the exemplary embodiment as shown in Figure 3, power and scalability is improved due to the larger processor.

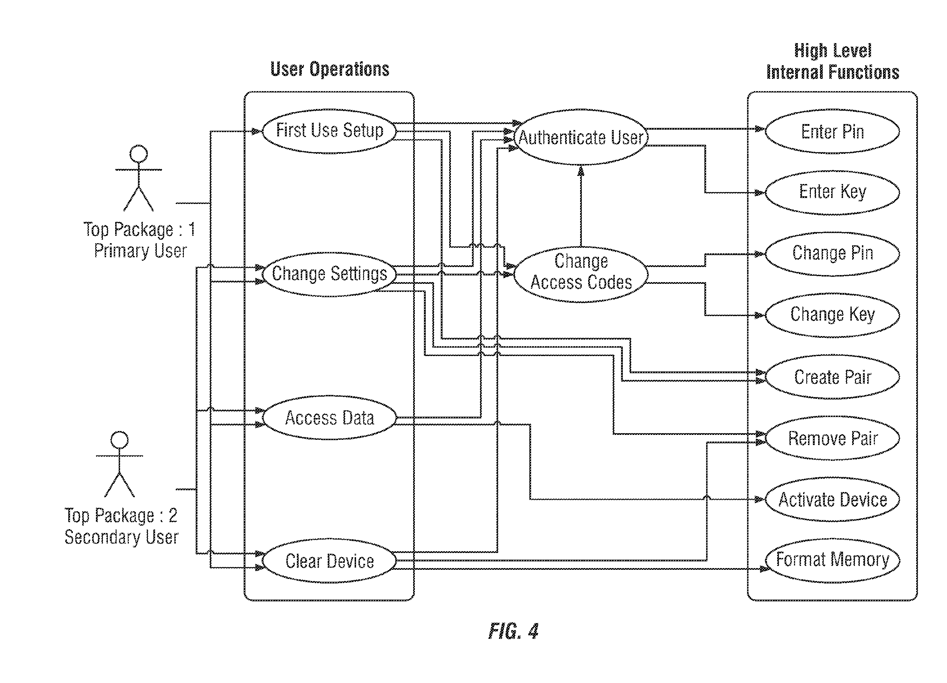

Referring to Figure 4 there is a schematic representation of the operations that a first primary user and a second secondary user may carry out with respect to the key and the data storage device. As can be seen in Figure 4, the primary user can set up the apparatus for first use, change settings, access data and also clear the data storage device. Once the device is active and working, providing the secondary user has the key and the appropriate identifiers they too will be able to not only access the data but also change settings and clear/format the data storage device.

In use, the key is plugged into a host device such as a PC or lap top and the user must enter an identifier such as a pass code. The pass code may comprise of 4 characters using both numerals and letters. The user will initially be provided with a pass code and then may enter an alternative code during first use set up. Once the correct pass code is entered, the PC or lap top is allowed to communicate with the key. Following this, a further identifier such as a pass code to enable communication between the data storage device and key must be entered. This may be for example a 13 digit encrypted coded key and can be either numerical or letters.

In the event that a user enters one or alternatively more of the identifiers incorrectly on three attempts, the software is configured to automatically freeze the device and make the information stored on the data storage device inaccessible.

To therefore gain access to upload or download information to the data storage device, the key, the data storage device, and the at least two identifiers are all required. Accordingly, if, for example, either the key or the data storage device were left unattended, an unauthorised user could not access the stored data.

A further feature of the present invention may include a portion or separate portion of memory provided on the data storage device that saves information relating to the use of the data storage device. For example, this information may be accessed by a primary user only and provide information relating to files that have been viewed and/or added at a certain time and date. Furthermore, information could be provided and stored confirming when data from the data storage device has been downloaded. If there is more than one key in use, then this information may also show and identify which key was used. Such information should beneficially be controlled by the primary user. The data may be stored in a text file. As an example, if the data storage device and the key is provided to a third party, which includes a draft, for example, of a document then monitoring of the use of this document may be made and logged. Furthermore, files stored on the data storage device may be changed to be read only thereby preventing access and/or modification by certain people even if they have a key.

An additional feature of the present arrangement may include a GPS tracking system which enables remote location of the data storage device. The data storage device may be configured to enable the information stored on the data storage device to be remotely formatted using radio frequency connections. Each data storage device may therefore contain an individual identifier such as serial number for the GPS system to locate the device and differentiate it from other similar devices. In order to remotely format the data storage device as required, wireless radio links similar to SIM cards in mobile phones may be utilised. Additionally, an anti-virus type software application may be stored on a separate memory component on the circuit board in the data storage device which debilitates or at least modifies the capabilities or behaviour of the equipment should an unauthorised user attempt to gain access to the data stored on the data storage device. In one embodiment a radio frequency tag may be utilised which may comprise an integrated circuit for storing and processing information, modulating, and demodulating a radio frequency signal. An antenna is also beneficially provided for receiving and transmitting a signal. Accordingly, the location of the data storage device may be monitored.

A further additional feature and capability of the invention would be to stream files from the data storage device direct to, for example, portable players but never send the files themselves. This feature would allow the likes of a music track to be streamed through a remote player but the track itself would never be sent to the external source. In one embodiment music files could be loaded onto the data storage device and the music streamed onto a portable music player, meaning that the music data is retained onto the data storage device but is played through a remote player. The remote player may be configured to receive the data storage device.

An exemplary embodiment of the present invention configured to stream data may be to provide a host device such as a PC or it is envisaged a data storage device which may be provided in a shop having data comprising music or film thereon may have incorporated therein a key which is matched to a data storage device. The data storage device may be purchased which is matched to the data source in, for example, the shop. In particular a key is beneficially inbuilt to an apparatus in a shop in order that a user may purchase read only files relating to music or film for example from the shop and download directly to the data storage device. The user then locates their data storage device near, in, or on, a data read device such that data is streamed from the data storage device to the data read device and played. The data read device may, for example, comprise a music docking station, a television, DVD player, games console etc. The read device further comprises a second matched key meaning that the data storage device must be matched to this key to enable the read device to communicate with the key. When the data storage device is brought into range of the second matched key, the user beneficially must enter an identifier such as a password which would enable data to be transferred between the data storage device and the data read device. Significant benefits are associated with such an arrangement as data may be provided in a read only format meaning that copying of the data is extremely difficult. Furthermore, music or films may be obtained from a recognised outlet such as a high street shop without requiring the use of packaging and may be provided directly between the data source in the shop and the data storage device and used or viewed or listened to in a location as a required. A significant advantage is therefore that the data is streamed from the data storage device in a read only format.

The present invention has been described by way of example only and it would be appreciated by a person skilled in the art that modifications and variations may be made to the present invention without departing from the scope of protection afforded by the appended claims.

## Claims

1. Data storage apparatus comprising:
- a data storage device having a receiver for receiving data;
- a transmission control device physically independent of the data storage device;
the apparatus arranged such that when a connection between the transmission control device and the data storage device is established, transmission of data between the data storage device and a further device is enabled, and when a connection between the transmission control device and data storage device is not established, transmission of data between the data storage device and the further device is non-enabled.

2. Apparatus according to claim 1 wherein the transmission control device provides an intermediate data transfer path between the data storage device and the further device; or wherein the transmission control device enables a direct data transfer path between the data storage device and the further device.

3. Apparatus wherein the data storage device is configured to be incapable of wired communication for data transfer with the further device.

4. Apparatus according to any of claims 1-3 wherein the data storage device comprises a sealed housing.

5. Apparatus according to any preceding claim wherein the further device is a data source or data destination, and preferably wherein the data source comprises a host computer.

6. Apparatus according to any preceding claim wherein the transmission control device has an interface for connecting to the further device, and preferably wherein the interface for connecting the transmission control device to the further device is a universal serial bus (USB) connection.

7. Apparatus according to any preceding claim wherein the transmission control device comprises a transmitter for transmitting data to the data storage device.

8. Apparatus according to any preceding claim wherein the transmission control device includes an identifier for matching with the data storage device; and optionally wherein the data storage device is matched to the transmission control device; and optionally wherein the data storage device further comprises a transmitter for transmitting data to the transmission control device, and the transmission control device comprises a receiver for receiving data from the data storage device.

9. Apparatus according to any preceding claim wherein the transmission control device comprises means to enable power to be drawn from the data source.

10. Apparatus according to any preceding claim wherein the transmission control device and the data storage device and/or the data storage device and the further device communicate via a wireless communication network; and preferably wherein data is transferred between the transmission control device and/or the further device and the data storage device via short length radio waves; and optionally wherein the apparatus comprises software configured such that the transmission control device is password protected.

11. Apparatus according to any preceding claim wherein the transmission control device comprises an encryption processor for performing encryption operations on data prior to transferring to the data storage device; and preferably wherein the data storage device comprises an encryption processor for performing encryption operations on data prior to transferring to the transmission control device.

12. Apparatus according to any preceding claim wherein the data storage device comprises a rechargeable power source, and optionally wherein the power source is rechargeable via an access port in the data storage device, or wherein the power source is rechargeable through a wireless charging system.

13. Apparatus according to any preceding claim wherein the data storage device further comprises a tag for providing information for identifying the location of the data storage device; and optionally wherein the apparatus further comprises a receiver for receiving an interrogation signal from a remote location, and the data storage device includes a transmitter for a transmitting a signal therefrom.

14. Apparatus according to claim 13 wherein the tag comprises a radio frequency tag.

15. Data storage system comprising:
- a data storage device having a receiver for receiving data and a transmitter for transmitting data;
- a first transmission control device physically independent of the data storage device;
- a second transmission control device physically independent of the data storage device;
the system arranged such that when a connection between the first transmission control device and the data storage device is established transmission of data from a data source to the data storage device is enabled, and when a connection between the data storage device and first transmission control device is not established transmission of data therebetween is non-enabled, and when a connection is established between the data storage device and the second transmission control device, transmission of data from the data storage device to a data destination is enabled, and when a connection between the second transmission control device and the data storage device is not established transmission of data therebetween is non-enabled.
